# EUROPEAN PATENT APPLICATION

(11) **EP 4 830 966 A1**
(43) Date of publication of application: **28.10.2026**
(21) Application number: 25205588.4
(22) Date of filing: 30.09.2025
(51) Int. Cl.: B60K 35/10, B60K 35/22, G06F 1/16, G06F 3/0488, G06F 3/14, H04M 1/02, H04M 1/72409

(54) **METHOD AND APPARATUS FOR CONTROLLING MOBILE TERMINAL, MEDIUM, AND DEVICE**

(30) Priority: 24.04.2025 CN 202510526929
(71) Applicant: Beijing Horizon Information Technology Co., Ltd., Beijing 100094 (CN)
(72) Inventor: MAO, Haichao, Beijing, 100094 (CN)
(74) Representative: Dehns Germany Partnerschaft mbB

(57) **Abstract**

Disclosed are a method for controlling a mobile terminal, medium, and device, including: determining current screen state information of a first display screen of the mobile terminal; determining, based on the current screen state information, a target touch window on a second display screen of an in-vehicle terminal and size information of the target touch window; in response to receiving a touch instruction for the target touch window, determining, based on a first touch coordinate of the touch instruction, the size information of the target touch window, and the current screen state information, a second touch coordinate obtained by mapping the first touch coordinate onto the first display screen; and sending a touch instruction including the second touch coordinate to the mobile terminal to control the mobile terminal to execute the touch instruction at a position corresponding to the second touch coordinate on the first display screen.

## Description

### FIELD OF THE INVENTION

This disclosure relates to the technical field of intelligent vehicles, and in particular, to a method and apparatus for controlling a mobile terminal, a medium, and a device.

### BACKGROUND OF THE INVENTION

With development of intelligent vehicle technologies, vehicles are more widely applied in daily life of people. For example, when in a driving scenario, a user may project screen content of a mobile terminal to a display screen of a vehicle device in a wired or wireless manner.

In related technologies, a conventional screen projection scheme is to establish a touch coordinate system based on fixed physical parameters (such as resolution and a length-width ratio) of a screen of the mobile terminal, so that the user can control an interface of the mobile terminal in a reverse direction through a touch screen of the vehicle device. However, for a mobile terminal with a foldable screen, when effective resolution changes because the screen is folded or unfolded, if original coordinate parameters are still used on the vehicle device, touch input may be misaligned with a display area of the screen.

In this way, how to provide a method for controlling a mobile terminal with a foldable screen becomes a problem that currently needs to be resolved.

### SUMMARY OF THE INVENTION

To resolve the foregoing technical problem, this disclosure provides a method and apparatus for controlling a mobile terminal, a medium, and a device, to resolve problems about controlling a mobile terminal with a foldable screen.

According to an aspect, a method for controlling a mobile terminal is provided, including:
determining current screen state information of a first display screen of the mobile terminal;
determining, based on the current screen state information, a target touch window on a second display screen of an in-vehicle terminal and size information of the target touch window;
in response to receiving a touch instruction for the target touch window, determining, based on a first touch coordinate of the touch instruction, the size information of the target touch window, and the current screen state information, a second touch coordinate that is obtained by mapping the first touch coordinate onto the first display screen; and
sending a touch instruction including the second touch coordinate to the mobile terminal to control the mobile terminal to execute the touch instruction at a position corresponding to the second touch coordinate on the first display screen.

According to another aspect, an apparatus for controlling a mobile terminal is provided, including:
a first obtaining module, configured to determine current screen state information of a first display screen of the mobile terminal;
a first determining module, configured to determine, based on the current screen state information, a target touch window on a second display screen of an in-vehicle terminal and size information of the target touch window;
a second determining module, configured to: in response to receiving a touch instruction for the target touch window, determine, based on a first touch coordinate of the touch instruction, the size information of the target touch window, and the current screen state information, a second touch coordinate that is obtained by mapping the first touch coordinate onto the first display screen; and
a first sending module, configured to send a touch instruction including the second touch coordinate to the mobile terminal to control the mobile terminal to execute the touch instruction at a position corresponding to the second touch coordinate on the first display screen.

According to still another aspect, a computer program product is provided in an embodiment. When instructions in the computer program product are executed by a processor, the method for controlling a mobile terminal provided in the embodiment of the first aspect of this disclosure is implemented.

According to yet another aspect, an electronic device is provided. The electronic device includes: a processor; and a memory configured to store processor-executable instructions. The processor is configured to read the executable instructions from the memory, and execute the instructions to implement the method for controlling a mobile terminal according to the first aspect.

According to the method for controlling a mobile terminal that is provided in the embodiments of this disclosure, the current screen state information of the first display screen of the mobile terminal may be determined; the target touch window on the second display screen of the in-vehicle terminal and the size information of the target touch window may be determined based on the current screen state information; in response to receiving the touch instruction for the target touch window, the second touch coordinate that is obtained by mapping the first touch coordinate onto the first display screen may be determined based on the first touch coordinate of the touch instruction, the size information of the target touch window, and the current screen state information; and the touch instruction including the second touch coordinate may be sent to the mobile terminal to control the mobile terminal to execute the touch instruction at the position corresponding to the second touch coordinate on the first display screen. According to this solution, the target touch window on the second display screen can be accurately determined based on the current screen state information of the first display screen of the mobile terminal. Therefore, after the touch instruction of a user on the target touch window is received, the first touch coordinate of the touch instruction can be accurately converted to the second touch coordinate on the second display screen by combining the size information of the target touch window and the current screen state information. Further, by sending the touch instruction including the second touch coordinate to the mobile terminal, the mobile terminal can be accurately controlled to execute a touch operation at a position corresponding to the second touch coordinate on the second display screen. In this way, precise control for the mobile terminal in various screen rotation orientations in different screen folding states can be implemented through the target touch window.

### BRIEF DESCRIPTION OF THE DRAWINGS

FIG. 1 is a schematic diagram of a scenario for controlling a mobile terminal according to an exemplary embodiment of this disclosure;
FIG. 2 is a schematic flowchart of a method for controlling a mobile terminal according to an exemplary embodiment of this disclosure;
FIG. 3 is a schematic flowchart of a method for controlling a mobile terminal according to another exemplary embodiment of this disclosure;
FIG. 4A and FIG. 4B show a schematic diagram of a coordinate system according to an exemplary embodiment of this disclosure;
FIG. 5 is a schematic flowchart of a method for controlling a mobile terminal according to still another exemplary embodiment of this disclosure;
FIG. 6A to FIG. 6D show a schematic diagram of a coordinate system according to an exemplary embodiment of this disclosure;
FIG. 7 is a schematic flowchart of a method for controlling a mobile terminal according to yet another exemplary embodiment of this disclosure;
FIG. 8A and FIG. 8B show a schematic diagram of a coordinate system according to an exemplary embodiment of this disclosure;
FIG. 9 is a schematic diagram of a structure of an apparatus for controlling a mobile terminal according to an exemplary embodiment of this disclosure; and
FIG. 10 is a diagram of a structure of an electronic device according to an exemplary embodiment of this disclosure.

### DETAILED DESCRIPTION OF THE EMBODIMENTS

To explain this disclosure, exemplary embodiments of this disclosure are described below in detail with reference to accompanying drawings. Obviously, the embodiments described are merely some, rather than all of embodiments of this disclosure. It should be understood that this disclosure is not limited to the exemplary embodiments.

It should be noted that unless otherwise specified, the scope of this disclosure is not limited by relative arrangement, numeric expressions, and numerical values of components and steps described in these embodiments.

### Application overview

In a conventional screen projection scheme, when a mobile terminal with a single screen is projected to a vehicle device, a touch coordinate system is established based on fixed physical parameters (such as resolution and a length-width ratio) of a screen of the mobile terminal, so that a user can control a screen of the mobile terminal in a reverse direction through a touch screen of the vehicle device. However, for a mobile terminal with a foldable screen, when an active display area changes when the screen switches from a semi-unfolded state to a folded state, or when the screen of the mobile terminal switches between portrait and landscape orientation, if original coordinate parameters are still used on the vehicle device, an inaccurate touch coordinate at which touch input of the vehicle device is mapped onto the screen of the mobile terminal may be resulted in.

Regarding the foregoing technical problem, according to a method for controlling a mobile terminal that is provided in embodiments of this disclosure, current screen state information of a first display screen of the mobile terminal may be determined; a target touch window on a second display screen of an in-vehicle terminal and size information of the target touch window may be determined based on the current screen state information; in response to receiving a touch instruction for the target touch window, a second touch coordinate that is obtained by mapping a first touch coordinate onto the first display screen may be determined based on the first touch coordinate of the touch instruction, the size information of the target touch window, and the current screen state information; and a touch instruction including the second touch coordinate may be sent to the mobile terminal to control the mobile terminal to execute the touch instruction at the position on the first display screen corresponding to the second touch coordinate. According to this solution, the target touch window on the second display screen can be accurately determined based on the current screen state information of the first display screen of the mobile terminal. Therefore, after the touch instruction of a user on the target touch window is received, the first touch coordinate of the touch instruction can be accurately converted to the second touch coordinate on the second display screen by combining the size information of the target touch window and the current screen state information. Further, by sending the touch instruction including the second touch coordinate to the mobile terminal, the mobile terminal can be accurately controlled to execute a touch operation on the second display screen at a position corresponding to the second touch coordinate. In this way, precise control for the mobile terminal in various screen rotation orientations in different screen folding states can be implemented through the target touch window.

### Exemplary system

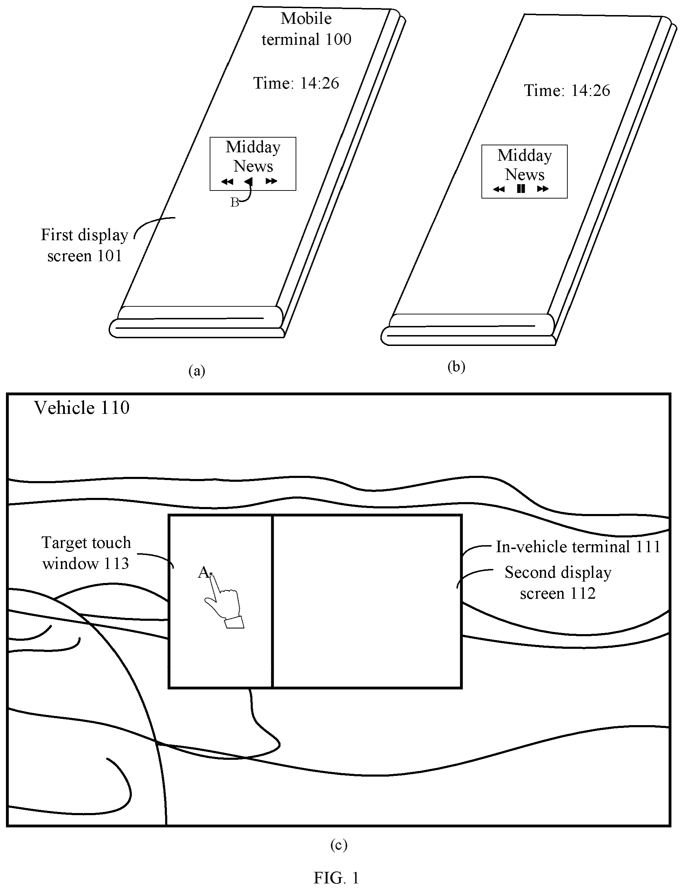

FIG. 1 is a schematic diagram of a scenario for controlling a mobile terminal according to an exemplary embodiment of this disclosure. As shown in FIG. 1, a mobile terminal 100 and an in-vehicle terminal 111 in a vehicle 110 are included.

For example, as shown in FIG. 1(a), a first display screen 101 of the mobile terminal 100 is in a folded state, a current screen orientation is a normal portrait orientation, and an interface of paused playback of "Midday News" is displayed on the first display screen 101. When a Bluetooth (serial port profile SPP) protocol has been established between the mobile terminal 100 and the in-vehicle terminal 111, current screen state information of the first display screen 101 may be sent to the in-vehicle terminal 111.

After the current screen state information of the first display screen 101 is obtained by the in-vehicle terminal 111, a target touch window 113 on the second display screen 112 shown in FIG. 1(c) and size information of the target touch window 113 may be determined based on the current screen state information.

For example, as shown in FIG. 1(c), if a user performs a click input at a position of a point A of the target touch window 113, in response to the click input, a second touch coordinate that is obtained by mapping a first touch coordinate onto the first display screen 101 may be determined based on the first touch coordinate of the click input, the size information of the target touch window 113, and the current screen state information.

After a touch instruction including the second touch coordinate is sent to the mobile terminal 100 by the in-vehicle terminal 111, as shown in FIG. 1(a), the mobile terminal 100 performs a click input at a position of a point B corresponding to the second touch coordinate. Thus, in response to the click input at the position of the point B, as shown in FIG. 1(b), the mobile terminal 100 displays an interface playing "Midday News" on the first display screen 101.

According to a method for controlling a mobile terminal that is provided in embodiments of this disclosure, the target touch window on the second display screen can be accurately determined based on the current screen state information of the first display screen of the mobile terminal. Therefore, after the touch instruction of a user on the target touch window is received, the first touch coordinate of the touch instruction can be accurately converted to the second touch coordinate on the second display screen by combining the size information of the target touch window and the current screen state information. Further, by sending the touch instruction including the second touch coordinate to the mobile terminal, the mobile terminal can be accurately controlled to execute a touch operation at a position corresponding to the second touch coordinate on the second display screen. In this way, precise control for the mobile terminal in various screen rotation orientations in different screen folding states can be implemented through the target touch window.

### Exemplary method

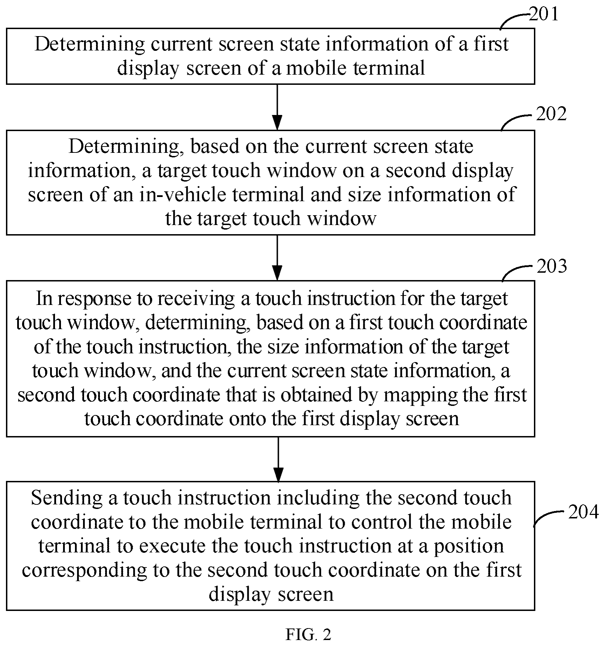

FIG. 2 is a schematic flowchart of a method for controlling a mobile terminal according to an exemplary embodiment of this disclosure. This embodiment may be applied to an electronic device. As shown in FIG. 2, the following steps are included.

Step 201: Determining current screen state information of a first display screen of the mobile terminal.

In this embodiment of this disclosure, the foregoing mobile terminal may be a mobile terminal with a single screen or a mobile terminal with a foldable screen. When the mobile terminal is a mobile terminal with a single screen, the first display screen is a fixed screen. When the mobile terminal is a mobile terminal with a foldable screen, the first display screen is a foldable screen. For example, the first display screen is a double-foldable screen or a triple-foldable screen.

In some embodiments, the current screen state information of the first display screen may include a current screen orientation, a current screen active display size, and current screen folding state information of the first display screen.

In some examples, the current screen orientation is used to indicate an orientation or a rotation angle of a current screen. For example, the current screen orientation may indicate that the current screen is rotated by 0 degrees, 90 degrees, 180 degrees, or 270 degrees.

In some examples, the current screen active display size refers to size information of an active display area on the first display screen corresponding to the current screen folding state information, including an active display width and an active display height. It should be noted that the active display area refers to a screen area on the first display screen that currently has display and touch capabilities.

In some examples, the current screen folding state information is a screen folding state of the first display screen at a current moment, and includes that the first display screen is in a folded state, in a semi-unfolded state, and in an unfolded state.

In some embodiments, step 201 may specifically include: obtaining updated current screen state information for the first display screen in response to a change of a screen state of the first display screen of the mobile terminal, wherein the change in the screen state includes at least one of the following: a change in a screen orientation and a change in the screen folding state.

When the screen state of the first display screen changes, the mobile terminal may send the updated current screen state information to the in-vehicle terminal, so that execution of steps S201 and S202 may be continued, that is, to rebuild a target touch window on the second display screen.

In some other embodiments, step 201 may specifically include: obtaining the current screen state information of the first display screen in response to that a preset protocol communication connection has been established between the in-vehicle terminal and the mobile terminal.

In some examples, preset protocols may include a Bluetooth (serial port profile, SPP) serial port protocol or a Bluetooth (generic attribute profile, GATT) low power protocol.

When the preset protocol communication connection has been established between the in-vehicle terminal and the mobile terminal, the in-vehicle terminal may receive the current screen state information of the first display screen that is sent from the mobile terminal.

Step 202: Determining, based on the current screen state information, a target touch window on a second display screen of an in-vehicle terminal and size information of the target touch window.

In some embodiments, for different screen state information of the first display screen, a position and the size information of the target touch window on the corresponding second display screen also vary. Therefore, the target touch window corresponding to the current screen state information and the size information of the target touch window may be determined when the current screen state information of the first display screen is obtained. The size information of the target touch window includes a width and a height of the target touch window.

In some embodiments, the target touch window may be highlighted on the second display screen, making it easier for a user to determine the position of the target touch window and perform a touch operation on the target touch window.

For example, the second display screen may be a central control screen.

Step 203: In response to receiving a touch instruction for the target touch window, determining, based on a first touch coordinate of the touch instruction, the size information of the target touch window, and the current screen state information, a second touch coordinate that is obtained by mapping the first touch coordinate onto the first display screen.

In some examples, the touch instruction for the target touch window refers to a command entered by the user on the target touch window. For example, the touch instruction is click input of the user on the target touch window of the user, or swipe input of the user on the target touch window. A type of the touch instruction is not limited in the embodiments of this disclosure.

The target touch window on the second display screen may be regarded as a touchpad that can receive any type of touch input from the user. The user performs a touch operation on the first display screen of the mobile terminal through the touch input in the target touch window, so as to remotely control the mobile terminal through the touch operation.

Step 204: Sending a touch instruction including the second touch coordinate to the mobile terminal to control the mobile terminal to execute the touch instruction at a position corresponding to the second touch coordinate on the first display screen.

For example, exemplary description is made by using an example in which the touch instruction is a click operation. When the user performs a click operation at the first touch coordinate (300, 600) of the target touch window on the second display screen of the in-vehicle terminal, in response to the click operation, the first touch coordinate is converted into the second touch coordinate (450, 900) mapped on the first display screen. After the touch instruction including (450, 900) is sent to the mobile terminal by the in-vehicle terminal, the mobile terminal performs a click operation at the position corresponding to (450, 900) on the first display screen. Thus, the mobile terminal may respond to the click operation at the position corresponding to (450, 900), so as to control the mobile terminal through the touch operation on the in-vehicle terminal.

According to the method for controlling a mobile terminal that is provided in the embodiments of this disclosure, the current screen state information of the first display screen of the mobile terminal may be determined; the target touch window on the second display screen of the in-vehicle terminal and the size information of the target touch window may be determined based on the current screen state information; in response to receiving the touch instruction for the target touch window, the second touch coordinate that is obtained by mapping the first touch coordinate onto the first display screen may be determined based on the first touch coordinate of the touch instruction, the size information of the target touch window, and the current screen state information; and the touch instruction including the second touch coordinate may be sent to the mobile terminal to control the mobile terminal to execute the touch instruction at the position corresponding to the second touch coordinate on the first display screen. According to this solution, the target touch window on the second display screen can be accurately determined based on the current screen state information of the first display screen of the mobile terminal. Therefore, after the touch instruction of the user on the target touch window is received, the first touch coordinate of the touch instruction can be accurately converted to the second touch coordinate on the second display screen by combining the size information of the target touch window and the current screen state information. Further, by sending the touch instruction including the second touch coordinate to the mobile terminal, the mobile terminal can be accurately controlled to execute the touch operation at the position corresponding to the second touch coordinate on the second display screen. In this way, precise control for the mobile terminal in various screen rotation orientations in different screen folding states can be implemented through the target touch window.

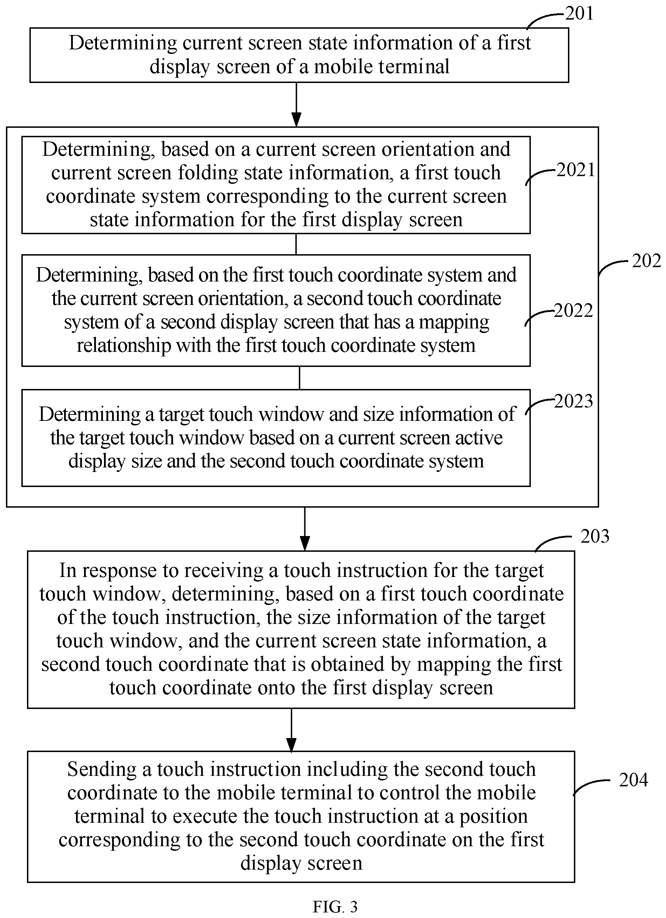

As shown in FIG. 3, the current screen state information of the first display screen includes the current screen orientation, the current screen active display size, and the current screen folding state information of the first display screen. On the basis of the embodiments shown in FIG. 2, step 202 may include the following steps.

Step 2021: Determining, based on the current screen orientation and the current screen folding state information, a first touch coordinate system corresponding to the current screen state information for the first display screen.

A change in the screen orientation (such as a landscape orientation or a portrait orientation) may cause the first touch coordinate system of the first display screen of the mobile terminal to rotate, and the active display area is essentially a mapping area on the first display screen. Therefore, the mapping area under the first touch coordinate system changes when a layout of the active display area on the first display screen changes with different screen folding states of the first display screen. Therefore, different screen orientations and screen folding state information correspond to different first touch coordinate systems of the first display screen. Thus, the first touch coordinate system corresponding to the current screen state information may be determined for the first display screen based on the current screen orientation and the current screen folding state information.

In some examples, generally the first touch coordinate system of the first display screen may be constructed by using an upper left corner of the first display screen as a coordinate origin, using a direction extending rightwards from the coordinate origin as a horizontal axis (x-axis) direction, and using a direction extending downwards from the coordinate origin as a vertical axis (y-axis) direction. When the screen orientation changes, a direction of the coordinate system may change, that is, the first touch coordinate system may change.

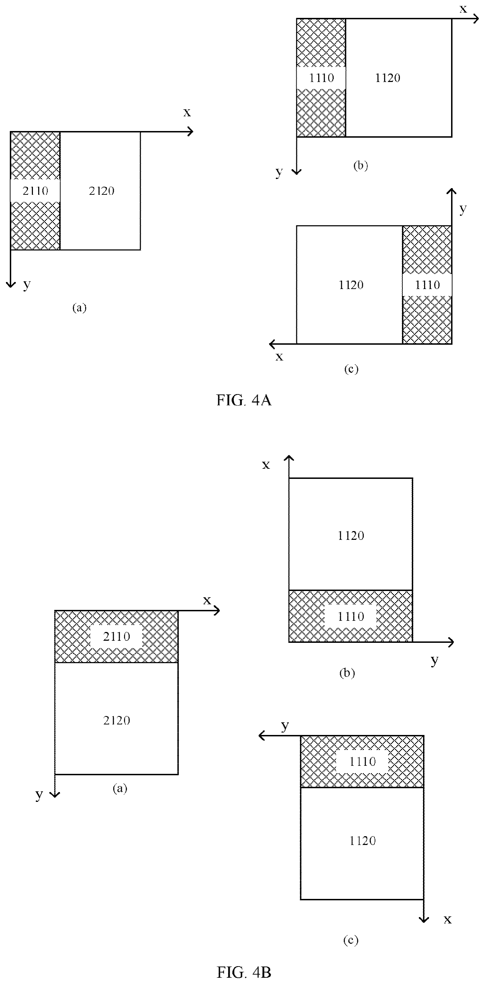

For example, FIG. 4A shows a schematic diagram of a coordinate system according to an exemplary embodiment of this disclosure. As shown in FIG. 4A(b), when the current screen orientation is a normal portrait orientation, that is, the first display screen is rotated by 0 degrees, and the current screen folding state information indicates that the first display screen is in a fully folded state, the first touch coordinate system is constructed by using the upper left corner of the first display screen as a coordinate origin, using a direction extending rightwards from the coordinate origin as a horizontal axis (x-axis) direction, and using a direction extending downwards from the coordinate origin as a vertical axis (y-axis) direction. 1110 represents the active display area on the first display screen. As shown in FIG. 4A(c), when the current screen orientation is a reverse portrait orientation, that is, the first display screen is rotated by 180 degrees clockwise, and the current screen folding state information indicates that the first display screen is in a fully folded state, a position of the upper left corner of the first display screen becomes a position of a lower right corner. In other words, an origin of the coordinate system needs to be rotated by 180 degrees clockwise. The first touch coordinate system corresponding to the current screen orientation and the current screen folding state information may be obtained by rotating the coordinate system shown in FIG. 4A(b) by 180 degrees clockwise.

For example, FIG. 4B shows a schematic diagram of a coordinate system according to an exemplary embodiment of this disclosure. As shown in FIG. 4B(b), when the current screen orientation is a normal landscape orientation, that is, the first display screen is rotated by 90 degrees counterclockwise, and the current screen folding state information indicates that the first display screen is in a fully folded state, a position of the upper left corner of the first display screen becomes a position of a lower left corner. In other words, an origin of the coordinate system needs to be rotated by 90 degrees counterclockwise. The first touch coordinate system corresponding to the current screen orientation and the current screen folding state information may be obtained by rotating the coordinate system shown in FIG. 4A(b) by 90 degrees counterclockwise. As shown in FIG. 4B(c), when the current screen orientation is a reverse landscape orientation, that is, the first display screen is rotated by 270 degrees clockwise, and the current screen folding state information indicates that the first display screen is in a fully folded state, a position of the upper left corner of the first display screen becomes a position of a lower left corner. In other words, an origin of the coordinate system needs to be rotated by 270 degrees counterclockwise. The first touch coordinate system corresponding to the current screen orientation and the current screen folding state information may be obtained by rotating the coordinate system shown in FIG. 4A(b) by 270 degrees counterclockwise.

Step 2022: Determining, based on the first touch coordinate system and the current screen orientation, a second touch coordinate system of the second display screen that has a mapping relationship with the first touch coordinate system.

In some embodiments, the second touch coordinate system of the second display screen of the in-vehicle terminal and the first touch coordinate system are aligned in a same direction based on the current screen orientation and the first touch coordinate system. For example, when the first touch coordinate system is a coordinate system where the first display screen is in a landscape state, and the second touch coordinate system is also a coordinate system where the second display screen is in a landscape state. For another example, when the first touch coordinate system is a coordinate system where the first display screen is in a portrait state, and the second touch coordinate system is also a coordinate system where the second display screen is in a portrait state.

In some embodiments, a second coordinate system is constructed based on a current screen orientation of the second display screen after the second touch coordinate system of the second display screen of the in-vehicle terminal and the first touch coordinate system are aligned in a same direction. In the current screen orientation, the second touch coordinate system of the second display screen may always be obtained by taking an upper left corner of the second display screen as a coordinate origin, taking a direction extending rightwards from the coordinate origin as a horizontal axis (x-axis) direction, and taking a direction extending downwards from the coordinate origin as a vertical axis (y-axis) direction.

In an example, FIG. 4A(b) shows the first touch coordinate system when the first display screen is in a normal portrait state (that is, being rotated by 0 degrees). Regarding the second display screen shown in FIG. 4A(a), when the second display screen is also in a portrait state, the second touch coordinate system is constructed by taking the upper left corner of the second display screen as a coordinate origin, taking a direction extending rightwards from the coordinate origin as a horizontal axis (x-axis) direction, and taking a direction extending downwards from the coordinate origin as a vertical axis (y-axis) direction. FIG. 4A(c) shows the first touch coordinate system when the first display screen is in a reverse portrait state (that is, being rotated by 180 degrees). Regarding the second display screen shown in FIG. 4A(a), when the second display screen is also in a landscape state, the second touch coordinate system is constructed by using the upper left corner of the second display screen as a coordinate origin, using a direction extending rightwards from the coordinate origin as a horizontal axis (x-axis) direction, and using a direction extending downwards from the coordinate origin as a vertical axis (y-axis) direction.

In another example, FIG. 4B(b) shows the first touch coordinate system when the first display screen is in a normal landscape state (that is, being rotated by 90 degrees counterclockwise). Regarding the second display screen shown in FIG. 4B(a), when the second display screen is also in a landscape state, the second touch coordinate system is constructed by taking the upper left corner of the second display screen as a coordinate origin, taking a direction extending rightwards from the coordinate origin as a horizontal axis (x-axis) direction, and taking a direction extending downwards from the coordinate origin as a vertical axis (y-axis) direction. FIG. 4B(c) shows the first touch coordinate system when the first display screen is in a reverse landscape state (that is, being rotated by 270 degrees counterclockwise). Regarding the second display screen shown in FIG. 4B(a), when the second display screen is also in a landscape state, the second touch coordinate system is constructed by taking the upper left corner of the second display screen as a coordinate origin, taking a direction extending rightwards from the coordinate origin as a horizontal axis (x-axis) direction, and taking a direction extending downwards from the coordinate origin as a vertical axis (y-axis) direction.

Step 2023: Determining the target touch window and the size information of the target touch window based on the current screen active display size and the second touch coordinate system.

The target touch window corresponds to an active display area corresponding to the current screen active display size.

In some embodiments, an aspect ratio of the active display area may be determined based on the current screen active display size. Since the aspect ratio of the target touch window is same as that of the active display area, the size information of the target touch window may be determined based on a preset constraint condition and the aspect ratio of the active display area. The size information of the target touch window includes the width and the height of the target touch window, and the preset constraint condition is used to constrain a size of the target touch window. For example, the preset constraint condition constrains the height of the target touch window to be a preset height, or constrains the width of the target touch window to be a preset width.

For example, the size information of the target touch window includes a width w1 and a height h1 of the target touch window. When the preset constraint condition constrains the height of the target touch window to be the preset height, the preset height is determined as the height h1 of the target touch window. Since the aspect ratio of the active display area is w2/h2, it is satisfied that w1= (w2/h2)*h1.

In some embodiments, since a layout of the target touch window varies under different second touch coordinate systems, and the target touch window corresponds to the active display area corresponding to the current screen active display size, the target touch window on the corresponding second display screen may be determined based on the second touch coordinate system and the current screen active display size.

According to the method for controlling a mobile terminal that is provided in the embodiments of this disclosure, the first touch coordinate system corresponding to the current screen state information may be determined for the first display screen based on the current screen orientation and the current screen folding state information, and the second touch coordinate system of the second display screen that has a mapping relationship with the first touch coordinate system may be determined based on the first touch coordinate system and the current screen orientation. Therefore, the target touch window and the size information of the target touch window may be determined based on the current screen active display size and the second touch coordinate system. According to this solution, the second touch coordinate system having a mapping relationship with the first touch coordinate system can be constructed in a real-time manner based on the first touch coordinate system that is determined based on the current screen orientation and the current screen folding state information. Therefore, the target touch window can be accurately determined based on the second touch coordinate system constructed in a real-time manner and the current screen active display size, so that the user can use the target touch window to implement precise touch control for the active display area of the mobile terminal.

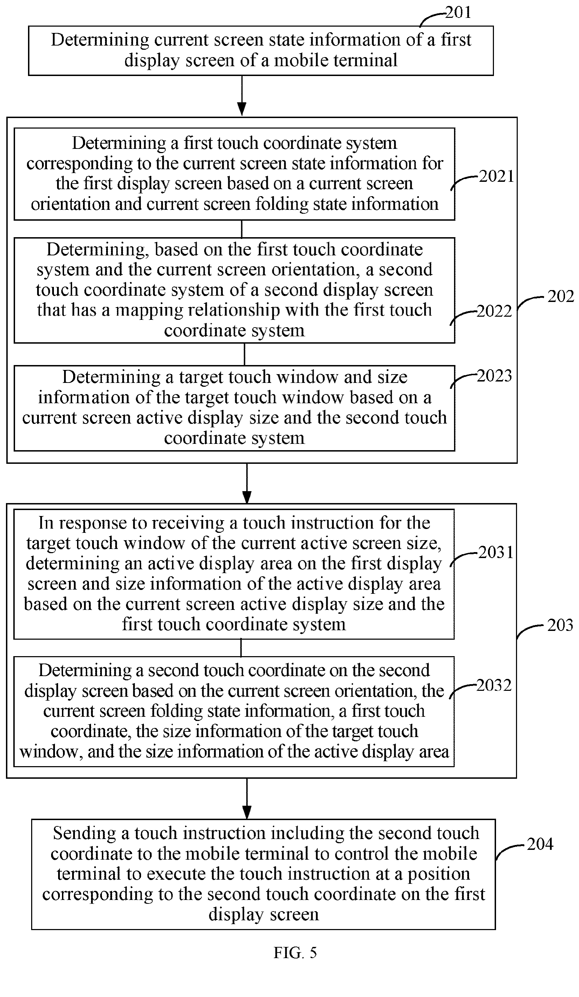

As shown in FIG. 5, on the basis of the embodiments shown in FIG. 3, step 203 may include the following steps.

Step 2031: In response to receiving the touch instruction for the target touch window of the current active screen size, determining an active display area on the first display screen and size information of the active display area based on the current screen active display size and the first touch coordinate system.

In some embodiments, the current screen active display size refers to the size information of the active display area. Therefore, an active display width in the current screen active display size may be used as a width of the active display area, and an active display height in the current screen active display size may be used as a height of the active display area.

In some embodiments, since the first touch coordinate system corresponds to the current screen orientation and the current screen folding state information of the first display screen, and an orientation of the active display area corresponds to the current screen orientation and the current screen folding state information, after the size information of the active display area is determined, the corresponding active display area may be determined based on the size information of the active display area and the first touch coordinate system.

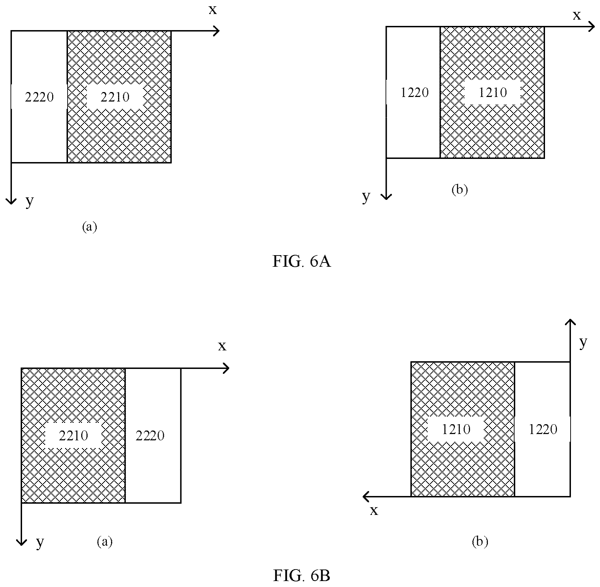

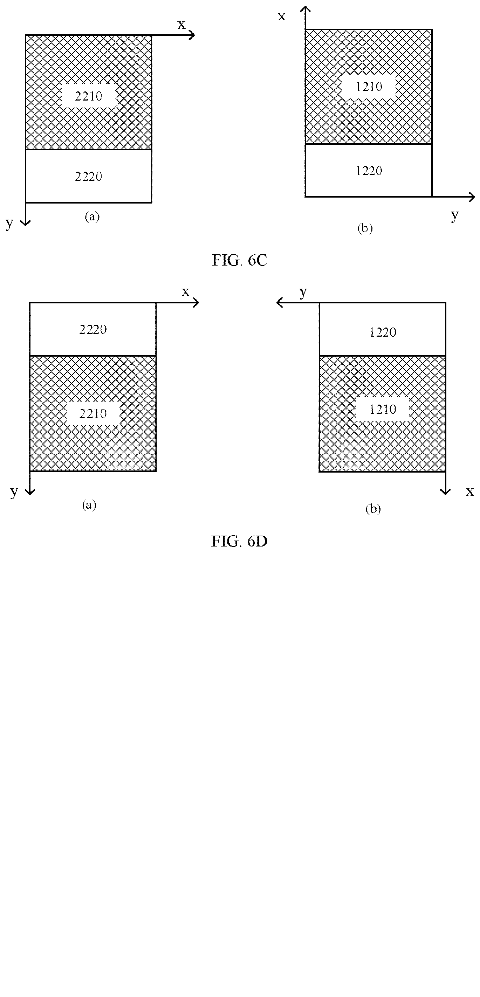

For example, FIG. 6A to FIG. 6D show schematic diagrams of coordinate systems where a first display screen is in a semi-unfolded state according to an exemplary embodiment of this disclosure. A coordinate system shown in FIG. 6A(b) is a first touch coordinate system corresponding to the first display screen when the first display screen is in a semi-unfolded state and the current screen orientation is a normal portrait orientation. An area 1210 shown in FIG. 6A(b) is the active display area on the first display screen. A coordinate system shown in FIG. 6B(b) is a first touch coordinate system corresponding to the first display screen when the first display screen is in a semi-unfolded state and the current screen orientation is a reverse portrait orientation. An area 1210 shown in FIG. 6B(b) is the active display area on the first display screen. A coordinate system shown in FIG. 6C(b) is a first touch coordinate system corresponding to the first display screen when the first display screen is in a semi-unfolded state and the current screen orientation is a normal landscape orientation. An area 1210 shown in FIG. 6C(b)is the active display area on the first display screen. A coordinate system shown in FIG. 6D(b) is a first touch coordinate system corresponding to the first display screen when the first display screen is in a semi-unfolded state and the current screen orientation is a reverse landscape orientation. An area 1210 shown in FIG. 6D(b) is the active display area on the first display screen.

Step 2032: Determining the second touch coordinate on the second display screen based on the current screen orientation, the current screen folding state information, the first touch coordinate, the size information of the target touch window, and the size information of the active display area.

In some embodiments, a size ratio relationship between the first touch coordinate and the target touch window may be determined based on the first touch coordinate and the size information of the target touch window. Moreover, the second touch coordinate may be obtained by converting the first touch coordinate to the second touch coordinate system on the second display screen based on the current screen orientation, the current screen folding state information, and the size ratio relationship. For specific details, reference may be made to detailed description in the following embodiments, and details are not described in the embodiments of this disclosure.

According to the method for controlling a mobile terminal that is provided in the embodiments of this disclosure, the first touch coordinate can be converted to the second touch coordinate based on the current screen orientation, the current screen folding state information, the size information of the target touch window, and the size information of the active display area. Therefore, it is ensured that the obtained second touch coordinate falls in the active display area corresponding to the target touch window, thereby preventing the touch coordinate from being mapped to an inactive display area on the first display screen. In this way, precise touch mapping of the target touch window to the active display area can be implemented.

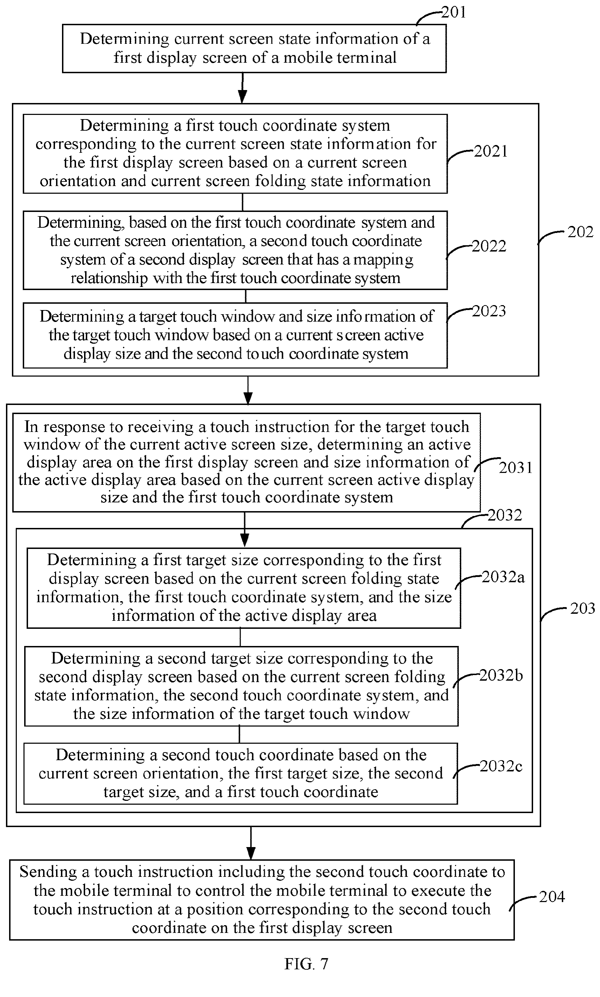

As shown in FIG. 7, on the basis of the embodiments shown in FIG. 5, step 2032 may include the following steps.

Step 2032a: Determining a first target size corresponding to the first display screen based on the current screen folding state information, the first touch coordinate system, and the size information of the active display area.

The first target size includes a first target width and a first target height.

In some examples, the current screen folding state information includes three folding states of the first display screen. The three folding states specifically include: the first display screen is in a folded state, the first display screen is in a semi-unfolded state, and the first display screen is in an unfolded state.

In some embodiments, the first target size is used to determine a mapping relationship between the first touch coordinate and the second touch coordinate. In other words, based on the first target size, the first touch coordinate may be converted into the second touch coordinate.

When the current screen folding state information indicates that the first display screen is in the folded state or the unfolded state, it is not required to consider the inactive display area on the first display screen. Therefore, the first target size is directly determined based on the size information of the active display area. When the current screen folding state information indicates that the first display screen is in the semi-unfolded state, it is required to consider the inactive display area on the first display screen. Therefore, the first target size is determined based on the size information of the active display area and the size information of the inactive display area.

In some embodiments, step 2032a may specifically include the following step (a), or include the following steps (b) to (d).
(a): In response to that the current screen folding state information indicates that the first display screen is in a folded state or an unfolded state, determining the first target size based on the size information of the active display area.

In some embodiments, when the first display screen is in the folded state or the unfolded state, the height of the active display area is determined as the first target height in the first target size, and the width of the active display area is determined as the first target width in the first target size.

For example, it is assumed that the first target height in the first target size is TargetHeight and the first target width in the first target size is TargetWidth. When the first display screen is in the folded state, as shown in FIG. 4A(b), the first display screen is a normal portrait orientation, and an area 1110 is the active display area. A horizontal width of the area 1110 is used as the first target width TargetWidth, and a vertical height of the area 1110 is used as the first target height TargetHeight. When the first display screen is in the folded state, as shown in FIG. 4A(c), the first display screen is a reverse portrait orientation, and an area 1110 is the active display area. A horizontal width of the area 1110 is used as the first target width TargetWidth, and a vertical height of the area 1110 is used as the first target height TargetHeight.

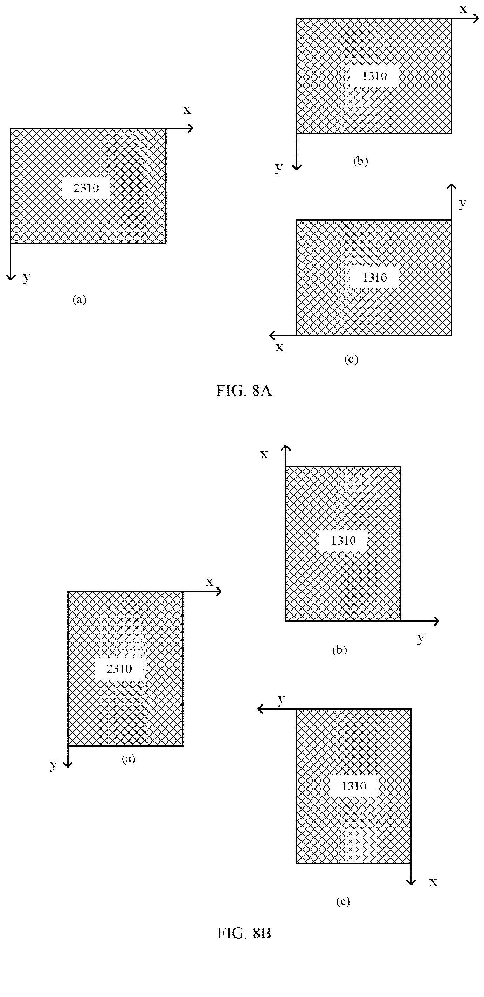

For example, FIG. 8A and FIG. 8B show schematic diagrams of coordinate systems where a first display screen is in a fully unfolded state according to an exemplary embodiment of this disclosure. It is assumed that the first target height in the first target size is TargetHeight and the first target width in the first target size is TargetWidth. When the first display screen is in the fully unfolded state, as shown in FIG. 8A(b), the first display screen is a normal portrait orientation, and an area 1310 is the active display area. A horizontal width of the area 1310 is used as the first target width TargetWidth, and a vertical height of the area 1310 is used as the first target height TargetHeight. When the first display screen is in the folded state, as shown in FIG. 8A(c), the first display screen is a reverse portrait orientation, and an area 1310 is the active display area. A horizontal width of the area 1310 is used as the first target width TargetWidth, and a vertical height of the area 1310 is used as the first target height TargetHeight.

In this way, when the first display screen is in the folded state or the fully unfolded state, the current screen orientation does not affect the first target size. In other words, when the current screen orientation is in any direction, the first target size is determined based on the size information of the active display area.

(B): In response to that the current screen folding state information indicates that the first display screen is in a semi-unfolded state, obtaining size information of an inactive display area on the first display screen corresponding to the current screen folding state information.

In some examples, the inactive display area refers to an unavailable screen area on the first display screen when the first display screen is in the semi-unfolded state. The in-vehicle terminal may receive the size information of the inactive display area that is sent from the mobile terminal, where the size information includes a width and a height of the inactive display area.

(C): Determining offset size information of the inactive display area based on the size information of the inactive display area and the first touch coordinate system.

In some embodiments, the offset size information refers to a screen size offset of the inactive display area relative to the active display area, and may include a horizontal offset value and a vertical offset value. The size information of the inactive display area includes the width and the height of the inactive display area. An offset value of the inactive display area relative to the active display area in a horizontal axis direction of the first touch coordinate system is determined as the horizontal offset value, and an offset value of the inactive display area relative to the active display area in a vertical axis direction of the first touch coordinate system is determined as the vertical offset value.

For example, as shown in FIG. 6A(b), an area 1220 is the inactive display area, where a horizontal offset value of the area 1220 is the width of the inactive display area in the x-axis direction, and a vertical offset value of the area 1220 is 0. As shown in FIG. 6B(b), an area 1220 is the inactive display area, where a horizontal offset value of the area 1220 is the width of the inactive display area in the x-axis direction, and a vertical offset value of the area 1220 is 0. As shown in FIG. 6C(b), an area 1220 is the inactive display area, where a horizontal offset value of the area 1220 is the width of the inactive display area in the x-axis direction, and a vertical offset value of the area 1220 is 0. As shown in FIG. 6D(b), an area 1220 is the inactive display area, where a horizontal offset value of the area 1220 is the width of the inactive display area in the x-axis direction, and a vertical offset value of the area 1220 is 0.

It may be learned from the foregoing embodiments that the horizontal offset value is a horizontal width of the inactive display area, and the vertical offset value is 0.

(D): Determining the first target size based on the offset size information and the size information of the active display area.

In some embodiments, when the offset size information includes the horizontal offset value and the vertical offset value, the first target width in the first target size is determined based on the horizontal offset value and the width of the active display area, and the first target height in the first target size is determined based on the vertical offset value and the height of the active display area.

For example, it is assumed that the first target height in the first target size is TargetHeight and the first target width in the first target size is TargetWidth. When the first display screen is in the semi-unfolded state, as shown in FIG. 6C(b), the area 1210 is the active display area and the area 1220 is the inactive display area. Since a horizontal offset value of the area 1220 is a width of the area 1220 in the x-axis direction, the first target width is a sum of a horizontal width of the area 1220 and a horizontal width of the area 1210. Since a vertical offset value of the area 1220 is 0, the first target height is a vertical height of the area 1210. Since the areas 1220 and 1210 are of equal height, the first target height is also a vertical height of the area 1220.

Step 2032b: Determining a second target size corresponding to the second display screen based on the current screen folding state information, the second touch coordinate system, and the size information of the target touch window.

The second target size includes a second target width and a second target height.

When the current screen folding state information indicates that the first display screen is in the folded state or the unfolded state, it is not required to consider a non-touch area on the second display screen that corresponds to the inactive display area. Therefore, the second target size is directly determined based on the size information of the target touch window. When the current screen folding state information indicates that the first display screen is in the semi-unfolded state, it is required to consider the non-touch area on the second display screen that corresponds to the inactive display area. Therefore, the first target size is determined based on the size information of the target touch window and size information of the non-touch area.

In some embodiments, the step 2032b may specifically include the following step (e), or include the following steps (f) and (g).

(e): In response to that the current screen folding state information indicates that the first display screen is in a folded state or an unfolded state, determining the second target size based on the size information of the target touch window.

When the first display screen is in the folded state or the unfolded state, the width of the target touch window is determined as the second target width in the second target size, and the height of the target touch window is determined as the second target height in the second target size.

For example, it is assumed that the second target height in the second target size is SourceHeight and the second target width in the second target size is SourceWidth. When the first display screen is in the folded state, as shown in FIG. 4A(a), an area 2110 is the target touch window, where a vertical height of the area 2110 is determined as the second target height SourceHeight, and a horizontal width of the area 2110 is determined as the second target width SourceWidth. As shown in FIG. 4B(a), an area 2110 is the target touch window, where a vertical height of the area 2110 is determined as the SourceHeight, and a horizontal width of the area 2110 is determined as the SourceWidth.

For example, it is assumed that the second target height in the second target size is SourceHeight and the second target width in the second target size is Source Width. When the first display screen is in the fully unfolded state, as shown in FIG. 8A(a), an area 2310 is the target touch window, wherein a vertical height of the area 2310 is determined as the second target height SourceHeight, and a horizontal width of the area 2310 is determined as the second target width SourceWidth. As shown in FIG. 8B(a), an area 2310 is the target touch window, wherein a vertical height of the area 2310 is determined as the second target height SourceHeight, and a horizontal width of the area 2310 is determined as the second target width Source Width.

(f): In response to that the current screen folding state information indicates that the first display screen is in a semi-unfolded state, determining a non-touch area corresponding to the inactive display area on the second display screen in the second touch coordinate system and size information of the non-touch area.

In some examples, since an inactive display areas corresponds to the non-touch area, a layout of the non-touch area on the second display screen may be determined based on the inactive display area. A ratio of the width of the inactive display area on the first display screen to the width of the active display area is same as a ratio of a width of the non-touch area on the second display screen to the width of the target touch window. Therefore, the width of the non-touch area is determined based on the ratio of the width of the inactive display area to the width of the active display area and the width of the target touch window, wherein a height of the non-touch area is the height of the target touch window.

For example, as shown in FIG. 6A, an area 2210 shown in FIG. 6A(a) is the target touch window, and an area 2220 is the non-touch area. The area 1210 shown in FIG. 6A(b) is the active display area, and the area 1220 is the inactive display area. A height of the area 2220 is a height of the area 2210. A width of the area 2220 satisfies that w1=(w3/w4)*w2, where w3 represents a width of the area 1220, w4 represents a width of the area 1210, and w2 represents a width of the area 2210.

For example, as shown in FIG. 6A, the area 2220 shown in FIG. 6A(a) is the non-touch area corresponding to the inactive display area 1220 shown in FIG. 6A(b). As shown in FIG. 6D, an area 2220 shown in FIG. 6D(a) is a non-touch area corresponding to the inactive display area 1220 shown in FIG. 6D(b).

(g): Determining the second target size based on the size information of the non-touch area and the size information of the target touch window.

In some embodiments, the size information of the non-touch area includes the width and the height of the non-touch area, and the size information of the target touch window includes the width and the height of the target touch window. The second target width in the second target size is determined based on the width of the non-touch area and the width of the target touch window, and the second target height in the second target size is determined based on the height of the non-touch area and the height of the target touch window.

For example, it is assumed that the second target height in the second target size is SourceHeight and the second target width in the second target size is SourceWidth. When the first display screen is in the folded state, as shown inFIG. 6A(a) , the area 2210 is the target touch window and the area 2220 is the non-touch area. A sum of a horizontal width of the area 2210 and a horizontal width of the area 2220 is determined as the SourceWidth. Since the areas 2210 and 2220 are of equal height, a vertical height of the area 2210 or the area 2220 is determined as the SourceHeight.

For example, it is assumed that the second target height in the second target size is SourceHeight and the second target width in the second target size is SourceWidth. When the first display screen is in the folded state, as shown in FIG. 6B(a), an area 2210 is the target touch window and an area 2220 is the non-touch area. A sum of a horizontal width of the area 2210 and a horizontal width of the area 2220 is determined as the SourceWidth. Since the areas 2210 and 2220 are of equal height, a vertical height of the area 2210 or the area 2220 is determined as the SourceHeight.

Step 2032c: Determining the second touch coordinate based on the current screen orientation, the first target size, the second target size, and the first touch coordinate.

In some embodiments, the first touch coordinate system of the first display screen may rotate for different screen orientations. Therefore, a horizontal axis and a vertical axis of the first touch coordinate system may be swapped relative to a horizontal axis and a vertical axis of the second touch coordinate system. In this case, it is required to convert the first touch coordinate to the second touch coordinate system corresponding to the current screen orientation based on the first target size and second target size, so as to calculate the second touch coordinate. For specific details, reference may be made to detailed description in the following embodiments, and details are not described in the embodiments of this disclosure.

In some embodiments, the first touch coordinate includes a first horizontal coordinate and a first vertical coordinate. Step 2032c may specifically include: in response to the current screen orientation indicating that a screen orientation of the first display screen is in a portrait state, determining a second horizontal coordinate based on the first horizontal coordinate, the first target width, and the second target width; determining a second vertical coordinate based on the first vertical coordinate, the first target height, and the second target height; and determining the second touch coordinate based on the second horizontal coordinate and the second vertical coordinate.

In some embodiments, the portrait state includes: the screen orientation of the first display screen is a normal portrait orientation, that is, a rotation angle of the first display screen is 0 degrees; and the screen orientation of the first display screen is a reverse portrait orientation, that is, the rotation angle of the first display screen is 180 degrees.

In some examples, when the portrait state indicates that the screen orientation of the first display screen is a normal portrait orientation, the second horizontal coordinate may be calculated according to the following formula (1), which is denoted as tx; and the second vertical coordinate may be calculated according to the following formula (2), which is denoted as ty.$tx = \left(sx/SourceWidth\right) * TargetWidth$ (1)

sx represents the first horizontal coordinate, TargetWidth represents the first target width, and SourceWidth represents the second target width.$ty = \left(sy/SourceHeight\right) * TargetHeight$ (2)

sy represents the first vertical coordinate, TargetHeight represents the first target height, and SourceHeight represents the second target height.

In some examples, when the portrait state indicates that the screen orientation of the first display screen is a reverse portrait orientation, that is, the first display screen is rotated by 180 degrees, the second horizontal coordinate may be calculated according to the following formula (3), which is denoted as tx; and the second vertical coordinate may be calculated according to the following formula (4), which is denoted as ty.$tx = \left(\left(SourceWidth-sx\right)/SourceWidth\right) * TargetWidth$ (3)

sx represents the first horizontal coordinate, TargetWidth represents the first target width, and Source Width represents the second target width.$ty = \left(\left(SourceHeight-sy\right)/SourceHeight\right) * TargetHeight$ (4)

sy represents the first vertical coordinate, TargetHeight represents the first target height, and SourceHeight represents the second target height.

In some embodiments, the first touch coordinate includes a first horizontal coordinate and a first vertical coordinate. Step 2032c may specifically include: in response to the current screen orientation indicating that a screen orientation of the first display screen is in a landscape state, determining a third horizontal coordinate based on the first vertical coordinate, the first target width, and the second target height; determining a third vertical coordinate based on the first horizontal coordinate, the first target height, and the second target width; and determining the second touch coordinate based on the third horizontal coordinate and the third vertical coordinate.

In some embodiments, the landscape state includes: the screen orientation of the first display screen is a normal landscape orientation, that is, a rotation angle of the first display screen is 90 degrees; and the screen orientation of the first display screen is a reverse landscape orientation, that is, the rotation angle of the first display screen is 270 degrees.

In some examples, when the landscape state indicates that the screen orientation of the first display screen is a normal landscape orientation, that is, the first display screen is rotated by 90 degrees counterclockwise, the third horizontal coordinate may be calculated according to the following formula (5), which is denoted as tx; and the third vertical coordinate may be calculated according to the following formula (6), which is denoted as ty.$tx = \left(\left(SourceHeight-sy\right)/SourceHeight\right) * TargetWidth$ (5)

sy represents the first vertical coordinate, TargetWidth represents the first target width, and SourceHeight represents the second target height.$ty = \left(sx/SourceWidth\right) * TargetHeight$ (6)

sx represents the first horizontal coordinate, TargetHeight represents the first target height, and SourceWidth represents the second target width.

In some examples, when the landscape state indicates that the screen orientation of the first display screen is a reverse landscape orientation, that is, the first display screen is rotated by 270 degrees counterclockwise, the third horizontal coordinate may be calculated according to the following formula (7), which is denoted as tx; and the third vertical coordinate may be calculated according to the following formula (8), which is denoted as ty.$tx = \left(sy/SourceHeight\right) * TargetWidth$ (7)

sy represents the first vertical coordinate, TargetWidth represents the first target width, and SourceHeight represents the second target height.$ty = \left(\left(SourceWidth-sx\right)/SourceWidth\right) * TargetHeight$ (8)

sx represents the first horizontal coordinate, TargetHeight represents the first target height, and SourceWidth represents the second target width.

In some embodiments, after the third horizontal coordinate and the third vertical coordinate are determined, the third horizontal coordinate may be determined as a horizontal coordinate of the second touch coordinate, and the third vertical coordinate may be determined as a vertical coordinate of the second touch coordinate.

According to the method for controlling a mobile terminal that is provided in the embodiments of this disclosure, the first target size and the second target size corresponding to the respective display screens can be accurately determined based on the current screen folding state information, the first touch coordinate system, the size information of the active display area, the second touch coordinate system, and the size information of the target touch window. Therefore, the second touch coordinate of the first display screen in any screen orientation under different folding states can be accurately calculated based on the accurate first target size and second target size in combination with the current screen orientation, so that precise touch control for the corresponding position of the active display area can be implemented through touch control on the target touch window.

In some embodiments, step 204 may specifically include: generating and sending an input device descriptor corresponding to the in-vehicle terminal to the mobile terminal, wherein the input device descriptor includes type information and absolute coordinate system information of the in-vehicle terminal; and sending the touch instruction including the second touch coordinate to the mobile terminal in response to that the mobile terminal confirms, based on the input device descriptor, that the in-vehicle terminal is an input device of the mobile terminal.

In some embodiments, the type information of the in-vehicle terminal may be a multi-touch device, and the absolute coordinate system information may be physical screen resolution of the first display screen of the mobile terminal.

In some examples, the input device descriptor may be sent to the mobile terminal through a Bluetooth human interface device (HID) communication protocol.

According to the method for controlling a mobile terminal that is provided in the embodiments of this disclosure, since the input device descriptor corresponding to the in-vehicle terminal may be generated and sent to the mobile terminal, the touch instruction including the second touch coordinate can be sent to the mobile terminal after the mobile terminal confirms, based on the input device descriptor, that the in-vehicle terminal is the input device of the mobile terminal. In this way, the in-vehicle terminal is registered as a device of the mobile terminal through the input device descriptor, so that the touch instruction sent by the in-vehicle terminal can be recognized later to control the mobile terminal.

### Exemplary apparatus

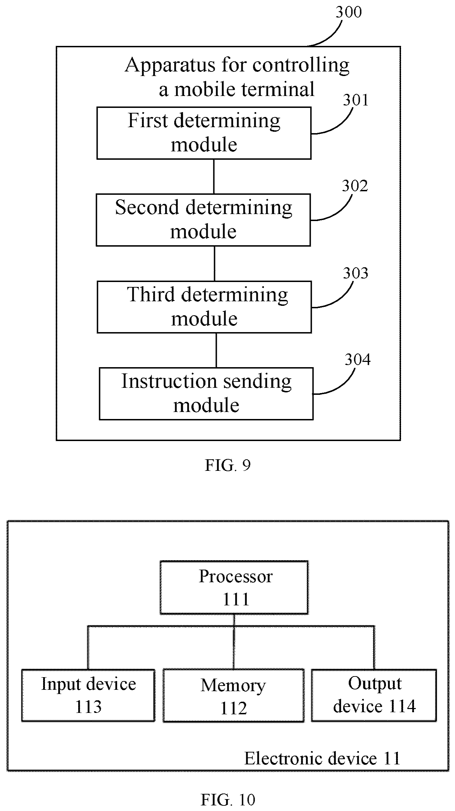

FIG. 9 is a schematic diagram of a structure of an apparatus for controlling a mobile terminal according to an exemplary embodiment of this disclosure. The control apparatus may be disposed in an electronic device such as a terminal device or a server, or on an object such as a vehicle, to implement the method for controlling a mobile terminal according to any one of the foregoing embodiments of this disclosure.

As shown in FIG. 9, an apparatus 300 may include:
a first determining module 301, configured to determine current screen state information of a first display screen of the mobile terminal;
a second determining module 302, configured to determine, based on the current screen state information, a target touch window on a second display screen of an in-vehicle terminal and size information of the target touch window;
a third determining module 303, configured to: in response to receiving a touch instruction for the target touch window, determine, based on a first touch coordinate of the touch instruction, the size information of the target touch window, and the current screen state information, a second touch coordinate that is obtained by mapping the first touch coordinate onto the first display screen; and
an instruction sending module 304, configured to send a touch instruction including the second touch coordinate to the mobile terminal to control the mobile terminal to execute the touch instruction at the position on the first display screen corresponding to the second touch coordinate.

In a possible implementation, the current screen state information of the first display screen includes a current screen orientation, a current screen active display size, and current screen folding state information of the first display screen. The second determining module 302 may be specifically configured to: determine a first touch coordinate system corresponding to the current screen state information for the first display screen based on the current screen orientation and the current screen folding state information; determine a second touch coordinate system of the second display screen that has a mapping relationship with the first touch coordinate system based on the first touch coordinate system and the current screen orientation; and determine the target touch window and the size information of the target touch window based on the current screen active display size and the second touch coordinate system, where the target touch window corresponds to an active display area corresponding to the current screen active display size.

In a possible implementation, the third determining module 303 may be specifically configured to: in response to receiving the touch instruction for the target touch window, determine an active display area on the first display screen and size information of the active display area based on the current screen active display size and the first touch coordinate system; and determine the second touch coordinate on the second display screen based on the current screen orientation, the current screen folding state information, the first touch coordinate, the size information of the target touch window, and the size information of the active display area.

In a possible implementation, the third determining module 303 may be specifically configured to: determine a first target size corresponding to the first display screen based on the current screen folding state information, the first touch coordinate system, and the size information of the active display area, wherein the first target size includes a first target width and a first target height; determine a second target size corresponding to the second display screen based on the current screen folding state information, the second touch coordinate system, and the size information of the target touch window, wherein the second target size includes a second target width and a second target height; and determine the second touch coordinate based on the current screen orientation, the first target size, the second target size, and the first touch coordinate.

In a possible implementation, the first touch coordinate includes a first horizontal coordinate and a first vertical coordinate. The third determining module 303 may be specifically configured to: in response to the current screen orientation indicating that a screen orientation of the first display screen is in a portrait state, determine a second horizontal coordinate based on the first horizontal coordinate, the first target width, and the second target width; determine a second vertical coordinate based on the first vertical coordinate, the first target height, and the second target height; and determine the second touch coordinate based on the second horizontal coordinate and the second vertical coordinate.

In a possible implementation, the first touch coordinate includes a first horizontal coordinate and a first vertical coordinate. The third determining module 303 may be specifically configured to: in response to the current screen orientation indicating that a screen orientation of the first display screen is in a landscape state, determine a third horizontal coordinate based on the first vertical coordinate, the first target width, and the second target height; determine a third vertical coordinate based on the first horizontal coordinate, the first target height, and the second target width; and determine the second touch coordinate based on the third horizontal coordinate and the third vertical coordinate.

In a possible implementation, the third determining module 303 may be specifically configured to: in response to that the current screen folding state information indicates that the first display screen is in a folded state or an unfolded state, determine the first target size based on the size information of the active display area; or
in response to that the current screen folding state information indicates that the first display screen is in a semi-unfolded state, obtain size information of an inactive display area on the first display screen corresponding to the current screen folding state information;
determine offset size information of the inactive display area based on the size information of the inactive display area and the first touch coordinate system; and
determine the first target size based on the offset size information and the size information of the active display area.

In a possible implementation, the third determining module 303 may be specifically configured to: in response to that the current screen folding state information indicates that the first display screen is in a folded state or an unfolded state, determine the second target size based on the size information of the target touch window; or
in response to that the current screen folding state information indicates that the first display screen is in a semi-unfolded state, determine a non-touch area corresponding to the inactive display area on the second display screen in the second touch coordinate system and size information of the non-touch area; and
determine the second target size based on the size information of the non-touch area and the size information of the target touch window.

In a possible implementation, the first determining module 301 may be specifically configured to: obtain updated current screen state information for the first display screen in response to a change of a screen state of the first display screen of the mobile terminal.

The change in the screen state includes at least one of the following: a change in a screen orientation and a change in a screen folding state.

In a possible implementation, the instruction sending module 304 may be specifically configured to: generate and send an input device descriptor corresponding to the in-vehicle terminal to the mobile terminal, where the input device descriptor includes type information and absolute coordinate system information of the in-vehicle terminal; and
send the touch instruction including the second touch coordinate to the mobile terminal in response to that the mobile terminal confirms, based on the input device descriptor, that the in-vehicle terminal is an input device of the mobile terminal.

In a possible implementation, the first determining module 301 may be specifically configured to obtain the current screen state information of the first display screen in response to that a preset protocol communication connection has been established between the in-vehicle terminal and the mobile terminal.

For beneficial technical effects corresponding to the exemplary embodiments of this apparatus, reference may be made to the corresponding beneficial technical effects in the section of exemplary method described above, and details are not described herein again.

### Exemplary electronic device

FIG. 10 is a diagram of a structure of an electronic device according to an embodiment of this disclosure. The electronic device includes at least one processor 11 and a memory 12.

The processor 111 may be a central processing unit (CPU) or another form of processing unit having a data processing capability and/or an instruction execution capability, and may control other components in the electronic device 11 to implement desired functions.

The memory 112 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 111 may execute the one or more program instructions to implement the method for controlling a mobile terminal according to various embodiments of this disclosure that are described above and/or other desired functions.

In an example, the electronic device 11 may further include an input device 113 and an output device 114. These components are connected to each other through a bus system and/or another form of connection mechanism (not shown).

The input device 113 may include various types of sensors, including but not limited to: a distance sensor for detecting a distance between a target object and a vehicle; and an image sensor for collecting environment information around the vehicle. In some examples, the input device may also include: a pressure sensor for detecting seat pressure, and determining whether there is a passenger and a position of the passenger; a temperature sensor for monitoring temperature inside a cockpit; a humidity sensor for monitoring humidity inside the cockpit and assisting in adjusting a vehicle interior environment; an air quality sensor for monitoring air quality inside the vehicle, such as carbon dioxide and volatile organic compounds (VOCs); a light sensor for detecting light intensity inside and outside the vehicle; an acceleration sensor for detecting acceleration changes of the vehicle; a distance sensor for detecting a distance between the vehicle and another object; a touch screen sensor used for interaction with an in-vehicle infotainment system; a biometric sensor, such as fingerprint recognition and facial recognition; a heart rate monitor for monitoring heart rate of a driver; a sound sensor used for speech recognition and interaction, to implement a voice control function; a seat sensor for monitoring usage of a seat, such as whether the seat is occupied, and a body type of the passenger; a wireless communication sensor, such as Bluetooth or Wi-Fi, for connecting a smart device for data transmission and remote control. In addition to the foregoing examples, the input device may also include more or fewer sensors, and details are not described herein.

The output device 114 may output various types of information or signals to other hardware or devices, which may include a display, an in-vehicle stereo, a seat, a window, a steering wheel, a communication network, and a remote output device connected to the communication network. The display may include a plurality of different display screens such as a driver-seat display screen, a passenger display screen, and a rear display screen. The in-vehicle stereo may include a plurality of speakers disposed at different positions in the vehicle cockpit. The different display screens or speakers can all work independently.

Certainly, for simplicity, FIG. 10 shows only some of components in the electronic device 11 that are related to this disclosure, and components such as a bus and an input/output interface are omitted. In addition, according to specific application situations, the electronic device 11 may further include any other appropriate components.

### Exemplary computer program product and computer readable storage medium

In addition to the foregoing method and device, embodiments of this disclosure may also provide a computer program product, which includes computer program instructions. When the computer program instructions are run by a processor, the processor is enabled to perform the steps, of the method for controlling a mobile terminal according to the embodiments of this disclosure, that are described in the "Exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method for controlling a mobile terminal according to the embodiments of this disclosure, that are described in the "Exemplary method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for the embodiments of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A method for controlling a mobile terminal, **characterized in that** the method comprises:
determining (201) current screen state information of a first display screen of the mobile terminal;
determining (202), based on the current screen state information, a target touch window on a second display screen of an in-vehicle terminal and size information of the target touch window;
in response to receiving a touch instruction for the target touch window, determining (203), based on a first touch coordinate of the touch instruction, the size information of the target touch window, and the current screen state information, a second touch coordinate that is obtained by mapping the first touch coordinate onto the first display screen; and
sending (204) a touch instruction comprising the second touch coordinate to the mobile terminal, to control the mobile terminal to execute the touch instruction at a position on the first display screen corresponding to the second touch coordinate.

2. The method according to claim 1, wherein the current screen state information of the first display screen comprises a current screen orientation, a current screen active display size, and current screen folding state information of the first display screen; and the determining (202), based on the current screen state information, a target touch window on a second display screen of an in-vehicle terminal and size information of the target touch window comprises:
determining (2021), based on the current screen orientation and the current screen folding state information, a first touch coordinate system corresponding to the current screen state information for the first display screen;
determining (2022), based on the first touch coordinate system and the current screen orientation, a second touch coordinate system of the second display screen that has a mapping relationship with the first touch coordinate system; and
determining (2023) the target touch window and the size information of the target touch window based on the current screen active display size and the second touch coordinate system, wherein the target touch window corresponds to an active display area corresponding to the current screen active display size.

3. The method according to claim 2, wherein the in response to receiving a touch instruction for the target touch window, determining (203), based on a first touch coordinate of the touch instruction, the size information of the target touch window, and the current screen state information, a second touch coordinate that is obtained by mapping the first touch coordinate onto the first display screen comprises:
in response to receiving the touch instruction for the target touch window, determining (2031) an active display area on the first display screen and size information of the active display area based on the current screen active display size and the first touch coordinate system; and
determining (2032) the second touch coordinate on the second display screen based on the current screen orientation, the current screen folding state information, the first touch coordinate, the size information of the target touch window, and the size information of the active display area.

4. The method according to claim 3, wherein the determining (2032) the second touch coordinate on the second display screen based on the current screen orientation, the current screen folding state information, the first touch coordinate, the size information of the target touch window, and the size information of the active display area comprises:
determining (2032a) a first target size corresponding to the first display screen based on the current screen folding state information, the first touch coordinate system, and the size information of the active display area, wherein the first target size comprises a first target width and a first target height;
determining (2032b) a second target size corresponding to the second display screen based on the current screen folding state information, the second touch coordinate system, and the size information of the target touch window, wherein the second target size comprises a second target width and a second target height; and
determining (2032c) the second touch coordinate based on the current screen orientation, the first target size, the second target size, and the first touch coordinate.

5. The method according to claim 4, wherein the first touch coordinate comprises a first horizontal coordinate and a first vertical coordinate; and
the determining (2032c) the second touch coordinate based on the current screen orientation, the first target size, the second target size, and the first touch coordinate comprises:
in response to the current screen orientation indicating that a screen orientation of the first display screen is in a portrait state,
determining a second horizontal coordinate based on the first horizontal coordinate, the first target width, and the second target width;
determining a second vertical coordinate based on the first vertical coordinate, the first target height, and the second target height; and
determining the second touch coordinate based on the second horizontal coordinate and the second vertical coordinate.

6. The method according to claim 4, wherein the first touch coordinate comprises a first horizontal coordinate and a first vertical coordinate; and
the determining (2032c) the second touch coordinate based on the current screen orientation, the first target size, the second target size, and the first touch coordinate comprises:
in response to the current screen orientation indicating that a screen orientation of the first display screen is in a landscape state,
determining a third horizontal coordinate based on the first vertical coordinate, the first target width, and the second target height;
determining a third vertical coordinate based on the first horizontal coordinate, the first target height, and the second target width; and
determining the second touch coordinate based on the third horizontal coordinate and the third vertical coordinate.

7. The method according to any one of claims 4 to 6, wherein the determining (2032a) a first target size corresponding to the first display screen based on the current screen folding state information, the first touch coordinate system, and the size information of the active display area comprises:
in response to that the current screen folding state information indicates that the first display screen is in a folded state or an unfolded state, determining (a) the first target size based on the size information of the active display area; or
in response to that the current screen folding state information indicates that the first display screen is in a semi-unfolded state, obtaining (b) size information of an inactive display area on the first display screen corresponding to the current screen folding state information;
determining (c) offset size information of the inactive display area based on the size information of the inactive display area and the first touch coordinate system; and
determining (d) the first target size based on the offset size information and the size information of the active display area.

8. The method according to any one of claims 4 to 7, wherein the determining (2032b) a second target size corresponding to the second display screen based on the current screen folding state information, the second touch coordinate system, and the size information of the target touch window comprises:
in response to that the current screen folding state information indicates that the first display screen is in a folded state or an unfolded state, determining (e) the second target size based on the size information of the target touch window; or
in response to that the current screen folding state information indicates that the first display screen is in a semi-unfolded state, determining (f) a non-touch area corresponding to the inactive display area on the second display screen in the second touch coordinate system and size information of the non-touch area; and
determining (g) the second target size based on the size information of the non-touch area and the size information of the target touch window.

9. The method according to any one of claims 1 to 8, wherein the determining (201) current screen state information of a first display screen of the mobile terminal comprises:
obtaining updated current screen state information for the first display screen in response to a change of a screen state of the first display screen of the mobile terminal, wherein
the change in the screen state comprises at least one of the following: a change in a screen orientation and a change in a screen folding state.

10. The method according to any one of claims 1 to 9, wherein the sending (204) a touch instruction comprising the second touch coordinate to the mobile terminal comprises:
generating and sending an input device descriptor corresponding to the in-vehicle terminal to the mobile terminal, wherein the input device descriptor comprises type information and absolute coordinate system information of the in-vehicle terminal; and
sending the touch instruction comprising the second touch coordinate to the mobile terminal in response to that the mobile terminal confirms, based on the input device descriptor, that the in-vehicle terminal is an input device of the mobile terminal.

11. The method according to any one of claims 1 to 10, wherein the determining (201) current screen state information of a first display screen of the mobile terminal comprises:
obtaining the current screen state information of the first display screen in response to that a preset protocol communication connection has been established between the in-vehicle terminal and the mobile terminal.

12. An apparatus for controlling a mobile terminal (300), **characterized in that** the apparatus comprises:
a first determining module (301), configured to determine current screen state information of a first display screen of the mobile terminal;
a second determining module (302), configured to determine, based on the current screen state information, a target touch window on a second display screen of an in-vehicle terminal and size information of the target touch window;
a third determining module (303), configured to: in response to receiving a touch instruction for the target touch window, determine, based on a first touch coordinate of the touch instruction, the size information of the target touch window, and the current screen state information, a second touch coordinate that is obtained by mapping the first touch coordinate onto the first display screen; and
an instruction sending module (304), configured to send a touch instruction comprising the second touch coordinate to the mobile terminal, to control the mobile terminal to execute the touch instruction at a position on the first display screen corresponding to the second touch coordinate.

13. The apparatus according to claim12, wherein the second determining module (302) is configured to:
determine a first touch coordinate system corresponding to the current screen state information for the first display screen based on the current screen orientation and the current screen folding state information; determine a second touch coordinate system of the second display screen that has a mapping relationship with the first touch coordinate system based on the first touch coordinate system and the current screen orientation; and determine the target touch window and the size information of the target touch window based on the current screen active display size and the second touch coordinate system, where the target touch window corresponds to an active display area corresponding to the current screen active display size.

14. A computer readable storage medium, **characterized in that** the storage medium stores a computer program, when executed by a processor, causes the processor to implement the method for controlling a mobile terminal according to any one of claims 1 to 11.

15. An electronic device (11), **characterized in that** the electronic device comprises:
a processor (111); and
a memory (112), configured to store processor-executable instructions, wherein
the processor (111) is configured to read the executable instructions from the memory (112), and execute the instructions to implement the method for controlling a mobile terminal according to any one of claims 1 to 11.
